# EUROPEAN PATENT SPECIFICATION

(11) **EP 3 315 370 B1**
(45) Date of publication and mention of the grant of the patent: **10.03.2021**
(21) Application number: 17197838.0
(22) Date of filing: 23.10.2017
(51) Int. Cl.: B60T 8/175, B60T 7/12, B60W 10/02, B60W 10/18, B60W 30/18

(54) **TRACTOR, IN PARTICULAR ISODIAMETRIC OR WITH REAR TRACKS, WITH AUTOMATIC REVERSAL OF THE DIRECTION OF TRAVEL**
TRAKTOR, INSBESONDERE MIT ISODIAMETRISCHEN ODER MIT HINTEREN RAUPENKETTEN, MIT AUTOMATISCHER UMKEHRUNG DER FAHRTRICHTUNG
TRACTEUR, EN PARTICULIER ISODIAMÉTRIQUE OU AVEC DES PISTES ARRIÈRE, AVEC INVERSION AUTOMATIQUE DE LA DIRECTION DE DÉPLACEMENT

(30) Priority: 26.10.2016 IT 201600108254
(43) Date of publication of application: 02.05.2018
(73) Proprietor: BCS S.p.A., 20123 Milano (IT)
(72) Inventor: MAIOCCHI, Fabio, 20123 MILANO (IT)
(74) Representative: Martini, Gabriele

(56) References cited:
- EP-A1- 0 821 188
- DE-A1-102014 206 269
- US-A1- 2009 013 810

## Description

The present invention relates to a tractor equipped with a reversing device able to automatically reverse the direction of travel, or direction of movement, of the tractor.

In particular, the present invention finds its most beneficial application in isodiametric tractors, tractors with front wheels and rear tracks and, more generally, in tractors of smaller size. However, the present invention is also applicable to conventional tractors for the purpose of improving the steps of reversing the direction of travel.

As is known, the term tractor means a vehicle of large weight and size used in agriculture to tow a trailer or for supporting and moving equipment specific to agricultural work. Since their beginnings, agricultural tractors are traditionally characterised by the presence of rear wheels that are much larger than the front ones. This particular configuration is justified by the fact that the towing force is exerted mainly by the rear wheels and improves with an increase in the mass of the tractor. This configuration has also historically been inspired by the physiognomy of the ox, an excellent draught animal, which has two massive hind legs but slight forelegs.

Nowadays, tractors no longer solely fulfil the function of towing static equipment but are equipped with power take-offs at the front and/or rear for coupling to powered equipment which can thus draw power directly from the tractor to which it is connected.

The requirement to be able to work in confined spaces, such as for example in narrow vineyard rows, has led to the development of tractors that on the one hand can deliver a power similar or comparable to a conventional tractor and that on the other hand are less bulky with smaller dimensions in terms of height, length and width.

To meet this requirement, special tractors are now known, known in the field as "isodiametric" tractors, wherein the rear wheels have the same diameter as the front wheels. Recently, in order to provide these tractors with greater stability, grip on the ground, and tractive force, isodiametric tractors have undergone a further evolution which consists of replacing the rear wheels with tracks.

Both conventional tractors and isodiametric tractors with or without rear tracks have the requirement, as do all vehicles, to be able to reverse the direction of travel and, when requested, to proceed in reverse.

The mechanisms currently most used to control the reversal of the direction of travel of a tractor are of purely mechanical type and are operated and controlled exclusively by the driver by means of levers and/or pedals. However, these mechanical mechanisms have the major disadvantage both of requiring a certain experience in tractor driving and of being slow in operation. In fact, the aforesaid mechanical mechanisms for reversing the direction of travel can be operated by the driver only after having succeeded in stopping the tractor. In addition, an important aspect of these tractors is that in order to reverse the direction of travel, the driver must press the appropriate pedal controls every time. Given that tractors often have to reverse direction because of the narrow spaces in which they find themselves operating, repetition of the procedure can cause a significant physical discomfort to the tractor driver.

In order to make reversal of direction manoeuvres quicker and less tiring for the driver, tractors equipped with special devices for automatically reversing the direction of travel are known and available on the market nowadays; these devices are known as "electrohydraulic reversers". These electrohydraulic reversers are divided into two categories, the first of which is provided with two electrohydraulically operated clutches.

In this embodiment, the first clutch is configured to transmit motion directly to the gearbox with a direction of rotation such as to move the tractor "forwards". The second clutch, on the contrary, is configured to transmit motion to the gearbox with the opposite direction of rotation in such a way as to move the tractor "backwards".

The operation of this first category of reversers is very simple and lies in the fact that one clutch is simultaneously engaged when the other is disengaged, operating the relevant intermediate gears which reverse the direction of rotation at the input to the gearbox, in so doing moving the tractor in one direction or the other depending on the requirements. Operation of the two electrohydraulic clutches occurs by means of proportional solenoid valves and an electronic control unit which automatically manages dynamic operation of the reverser making the reversal of direction manoeuvre smooth and gradual.

In this embodiment, the speed of the tractor's motion at which it is possible to carry out the reversal of direction manoeuvre has no particular limits, except by choice of the individual manufacturer.

This first category of reversers is predominantly used in tractors of traditional configuration, i.e. with rear wheels much larger than the front ones, wherein there is a lot of room available for the gearbox, the transmission, and the dual clutch.

In contrast, it is not possible to install dual clutch electrohydraulic reversers in tractors of isodiametric configuration, i.e. with wheels of substantially equal size, or in any event of small size such as for example those equipped with rear tracks, because of bulkiness problems. For this reason, these types of tractors of small size are equipped with a different type of reverser that comprises a mechanical synchroniser operated by a double-acting hydraulic cylinder, which is in turn operated by proportional solenoid valves controlled by an electronic control unit. This second type of mechanism for reversing the direction of travel is smaller in size than the first type described above and does not require a dual clutch.

However, this second type of reverser has a major limitation connected with the maximum speed at which it can be operated. In particular, these reversers may be operated only below a given speed of movement of the tractor, of approximately 4-6 km/h. Beyond this threshold, carrying out a reversal of direction would make excessive demands on the tractor's mechanical synchroniser and clutch.

Disadvantageously, the tractor driver must therefore be endowed with significant driving skill so as to be able to estimate the ideal speed at which to proceed with the reversal of direction operation, otherwise the reverser will be damaged. In these tractors, if the reversal of direction mechanism is activated at a non-ideal speed of travel, the mechanism may also, in order to protect its mechanical components, not proceed to reverse the motion. Of course, this situation is extremely dangerous for the driver who, even after having activated the reversal of direction, sees the tractor proceeding against his will in the direction of travel that it was proceeding in and that he however wanted to reverse. It should be further noted that this estimation of the ideal speed at which to engage the reverser is complex since it is a function of many operational parameters of the tractor, such as, for example, the speed of travel, the total mass, the slope of the terrain, and the transmission ratio engaged.

EP0821188 discloses a tractor a and a method according respectively to the preamble of claims 1 and 7.

The objectives of the present invention are achieved by the features of independent claims 1 and 7.

Starting from this known prior art, an object of the present invention is to provide a tractor capable of overcoming the drawbacks in the abovementioned prior art in an extremely simple and particularly functional way.

In accordance with these objects, the present invention relates to a tractor comprising:
- a chassis;
- a cab, of the open or closed type and preferably provided with a seat, a steering wheel, and means of control by pedal and/or lever;
- a front axle provided with a pair of front wheels;
- a rear axle provided with a pair of rear wheels, preferably of the same size as the front ones, or rear tracks, preferably having the same overall height as the front wheels;
- an engine;
- a braking system;
- a single clutch;
- a selector for selectively engaging the forward and reverse gear ratios; and
- a control unit in communication with at least one sensor for measuring physical quantities such as mass, speed, slope of the terrain, etc.

All the said elements listed above belong to the prior art relating to the technical sector of agricultural tractors and as such do not require any further clarification. Nevertheless, in order to differentiate tractors from other vehicles, such as for example cars, the tractors of the present invention are of the type comprising a towing hook and/or a power take-off for agricultural equipment including of the motorised type.

The tractor of the present invention further comprises a control, preferably a lever in the cab, for operating the automatic reversal of the direction of travel. In particular, once the control for automatically reversing the direction of travel has been activated, the control unit is configured so as to control the braking system, the selector, and the clutch in a coordinated manner so as to reverse the direction of travel without requiring any action by the driver to control these components.

According to a first aspect of the invention, the control unit is configured to control the braking system, the selector, and the clutch in a coordinated manner depending on at least two physical entities and/or parameters (for convenience we call "parameters" both physical entities and parameters that can be constant or measured by suitable sensors), wherein one parameter is an "objective" operating parameter of the tractor measured by an appropriate sensor and at least one "subjective" control parameter set by the driver. According to a preferred embodiment of the invention, the "objective" operating parameter of the tractor may be the speed of travel of the tractor as a vector entity (or only the relative numerical value) and thus measured with a sensor or sensors coupled to a rotating transmission axis and/or with an inertial acceleration sensor and/or with a gyroscope sensor that allows to obtain the angular entity i.e. the angular rotational speed of the tractor around one or more axes of a reference system integral with the gyroscope (and / or with the inertial sensor) and therefore with the tractor. Moreover, this objective parameter may also be the acceleration (hereafter referred to as deceleration when the acceleration is negative) and / or the total mass and/or the slope of the terrain and/or the gear ratio. The "subjective" parameter set by the driver can instead be, for example, the acceleration that defines the power delivered by the engine during the acceleration and/or the deceleration that defines the power delivered to the braking system, and/or the maximum braking distance controlled by the reversal of direction engaged, which determines the power delivered to the braking system and / or the tractor stop distance from a target that determines the power delivered to the braking system, and/or a physical quantity measured by a suitable sensor.

Speed and acceleration as subjective physical entities or objective physical entities may be of a vector type or may be defined by their numerical value.

In this way, it is therefore beneficially possible to activate the reversal of direction and / or a controlled stop at any tractor speed without requiring the driver to have any particular driving skill and without incurring the risk that this manoeuvre is not actually performed. On the contrary, thanks to the present invention, each time the driver operates the control for reversing the direction of travel and / or a controlled stop of the tractor, the control unit automatically controls the braking system, the disengagement of the clutch, the movement of the selector from one direction of travel to the other, and the reengagement of the clutch in a coordinated manner. According to an embodiment of the invention, the control unit can also check the engine speed during the above-mentioned control step. The control unit can also check the status of the clutch during the reversal of direction step, i.e. the engine rpm (revolutions per minute) is transmitted from the engine to the transmission in order to avoid, on the one hand damaging the transmission mechanisms and, on the other hand in order to ensure that the correct power required by any equipment coupled to the tractor's power take-off is always delivered.

In addition, in an inventive way this first aspect of the invention relating to the coordinated control of the control unit also takes into account at least one subjective control parameter chosen by the driver which enables the tractor to achieve the same result, i.e. the automatic reversing of motion and / or a controlled stop of the tractor, with different customisable dynamics. In other words, the present invention offers the driver the possibility of modulating automatic actuation of the reversal of direction according to parameters, or graduated scales of one or more parameters, in order to perform the reversal of direction better, according to the driver's preferences. According to the example previously indicated, a subjective parameter which can be set by the driver on an adjustable graduated scale could be the acceleration that determines the power to be delivered to the driven shaft of the transmission and / or the deceleration that determines the power to be delivered to the braking system and / or braking space from the moment of driving a tractor control / or the braking space intended as the tractor's distance from a target; this braking determines the power delivered to the braking system. The driver can thus determine at will whether a reversal of direction with sudden braking or if preferred a manoeuvre with a lower deceleration is achieved or the desired acceleration during restart can be set. In addition, it is possible to control the braking space as a travelled space by the tractor when braking from a tractor control or as a stop position from an outside target to the tractor.

To this end, the integrated instrument panel of the cab comprises one or more knobs or equivalent technical means able to pre-select for the reverser control one of several different "notches" of deceleration and/or acceleration between a maximum and minimum value and / or the braking space and / or the stop distance from a target as described above.

Of course, the control for reversing the direction of travel can also be issued while the tractor is stationary in order to start off the tractor in the desired direction of travel.

In particular, the control unit can also control the engine and the clutch at the restart in the opposite direction performed in such a way as to deliver an accelerating power which is a function of the power parameter set up by the user supplied to the braking system.

In the restart steps following the reversal of direction, the user can thus beneficially also retrieve the same "custom" setting in terms of acceleration which previously led to the tractor slowing before reversing direction.

Of course, according to a different embodiment of the invention, the braking power before reversing direction and the acceleration performed on restart in the opposite direction can also be set in a different way by acting on dedicated knobs.

The objective operational parameter of the tractor is not only measured when the reverser control is operated but is continuously measured and processed by the electronic control unit throughout the manoeuvre of reversing the direction of travel or the starting of the tractor from a stationary condition.

In this case the control unit is beneficially able to "absorb" any sudden changes in the tractor's status, for example a sudden change of the slope of the terrain, even in these cases ensuring attainment of the result, i.e. safely reversing the direction of travel and / or the controlled stop as described above.

The sensor for measuring the tractor's objective operational parameter is an acceleration inertial sensor and/or a gyroscopic sensor installed on the chassis, in particular on the bodywork or on the dashboard in such a way as to intercept the dynamic variations with extreme rapidity before this change is entirely transmitted to the axle.

These sensors beneficially have the advantage of not being dependent on the sampling rate of the signal to be measured of the tractor's speed, in particular of the rotation speed of the transmission axles.

The mechanical transmission of the vehicle acts through the movement of the wheels over the ground, moving the chassis where both the sensor and the driver of the vehicle are located. The position of the acceleration sensor, as the gyroscopic sensor, is thus placed at the point of application of the propulsive force and the reaction force of the driver on the vehicle's chassis. The choice of this position of the sensor is not accidental but responds to the need to make the engagement of the clutch particularly gentle, but at the same time rapid and precise, irrespective of the profile of the terrain, and thus of external stresses, the load applied to the tractor, or any sudden change in the engine torque. The acceleration / gyroscopic sensor conveniently placed provides information to the control unit similar to that which come from the driver's back resting on the seat backrest when this driver wants to control the tractor using the clutch and therefore its pedal . It is in fact precisely the sensations that the driver experiences when pressed into the seat in the vehicle's acceleration phase which allow the correct operation of the clutch through its pedal as a function also of the stresses coming from the external environment. The external environment can cause acceleration or deceleration of the vehicle due to the rapidly changing soil profile; situations that can always be found in the agricultural world. The sum of all the stresses that come to the driver during manual operation of the clutch are transformed into sensory signals that allow the clutch to be engaged in the most appropriate manner.

Differently from the prior art wherein the sensor is attached to the wheel speed sensor, that is, a gear inside the motion transmission system or in anyway solidarity with the transmission system, the invention makes it possible to know in advance the acceleration and therefore the force coming from the surrounding environment causing stresses on the vehicle and then through the control unit it is possible to better adjust the objective set parameter. To this end a sensor of the inertial/gyroscopic type is provided which measures the acceleration before the engine has exerted its propulsive force. It is essential to note that the traditional system which measures the acceleration using sensors coupled to the transmission gears cannot measure the stresses produced by the external environment so sensitively, quick and precisely. In fact, said sensors mainly measure the response produced by the engine while, given the large torque required to move the gears these are scarcely sensitive to stresses coming from the outside environment.

The use of an inertial sensor for measuring the acceleration makes it possible to achieve a sampling frequency of the acceleration which is very high, constant and independent of the speed of the vehicle. It is thus possible to obtain uniform performance on a large number of gears selected by the operator, in particular at low speeds where conventional sensors provide only a limited number of samples of acceleration during the step of engagement and thus of control. A low sampling frequency makes the control less precise and less rapid while a high and constant sampling frequency ensures the correct control of drive during the clutch slip phase and on a large number of gears selected.

It is also possible to use a gyroscope sensor to better control the dynamics of the tractor in sudden inversion of direction. Moreover, in the case of sensors normally used in the present technique, it would not be possible to obtain a measurement of the rotation speed of the tractor around one or more axes of a reference system.

By summing up the prior art it does not allow to measure the sum of the stresses to which the tractor and the driver of the same agricultural vehicle are subjected, and therefore to provide a better control of the vehicle.

Of course, as described above in relation to the inertial acceleration sensor and its placement, (as per the gyroscopic sensor) this is applicable to tractors or vehicles in general with whatsoever means of propulsion, whether for example endothermic clutch, hydrostatic or electric.
The signals which allow the predetermined and controlled reversal of direction may also come from telemetry of various types, whether of ultrasonic or laser technology, or of another type such as mechanical contact probes or the same sensors as are present to measure the speed of the tractor and coupled to the wheel or any other suitable axis rotating in the tractor transmission. In addition, the power delivered to the braking system produces a predetermined and controlled braking is to be understood both as a control of the braking distance starting from the moment when the appropriate control on the tractor is operated as well as the means of stopping at a predetermined distance from a target such as a lorry on which to load material by means of equipment coupled to the tractor. The braking system is preferably configured to act on both the front and rear axles in order to optimise the use of the tractor even in mountain environments where tractors are often found to be operating on considerable slopes.

Further characteristics and advantages of the present invention will become apparent from the following description of a non-limiting example of an embodiment, with reference to the Figures of the accompanying drawings, wherein:
- Figure 1 is a schematic lateral view of a first preferred example of a tractor which can carry out the reversal of the direction of travel according to the present invention;
- Figure 2 is a schematic lateral view of a second preferred example of a tractor which can carry out the reversal of the direction of travel according to the present invention;
- Figure 3 is a schematic view of the components which can be installed in the tractors of Figures 1 and 2 and which contribute in an automatic and coordinated manner to the achievement of the reversal of the direction of travel according to the present invention.
- Figures 4 and 5 are enlarged views of two components of Figure 3, respectively, Figure 4 shows the transmission unit which connects the engine to the gearbox with the clutch and the gear ratio selector and Figure 5 shows the actuator of the braking system.

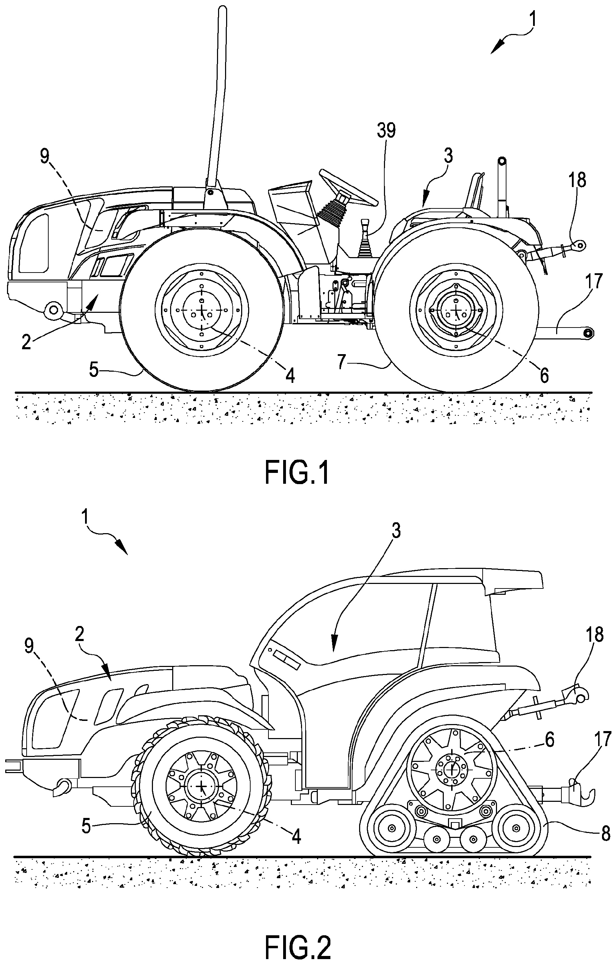

Reference will now be made to Figures 1-5 to describe in detail at least one embodiment of the invention.

Figure 1 shows a schematic lateral view of a first preferred example of an isodiametric tractor which can carry out the reversal of the direction of travel according to the present invention. The term isodiametric refers to the fact that the rear wheels have the same diameter as the front wheels. The specification of this type of tractor is functional to the present invention which in fact finds greater operational benefit in those tractors where, because of problems of bulk, the electrohydraulic solutions now known which provide two clutches for reversing the direction of travel of the tractor cannot be implemented. However, the present invention also relates to small non-isodiametric tractors as well as large traditional tractors.

In particular, the tractor in Figure 1 comprises a chassis 2, a front axle 4 provided with front wheels 5, and a rear axle 6 provided with rear wheels 7. An engine 9 connected in known manner to at least the rear axle 6 is arranged inside the chassis 2. The tractor 1 of Figure 1 comprises an open cab 3 at which a steering wheel, a gear lever 39 and pedal controls are provided according to the prior art.

For the purposes of the present invention a more detailed description of the components of tractor 1 belonging to the prior art in the field is not provided. It should just be clear that, due to its particular shape and operational purpose, a tractor cannot simply be understood as a passenger-carrying vehicle and thus be treated as a car or the like. By way only of example, as a discriminating element which is specific to tractors, Figure 1 shows a rear hook 17 for coupling to a towed vehicle and a third point 18 which acts as a hydraulically actuated hook to engage and move (raise/lower) a piece of agricultural equipment. The tractor 1 of Figure 1 also comprises a rear power take-off (not shown) for coupling to a piece of motorised agricultural equipment.

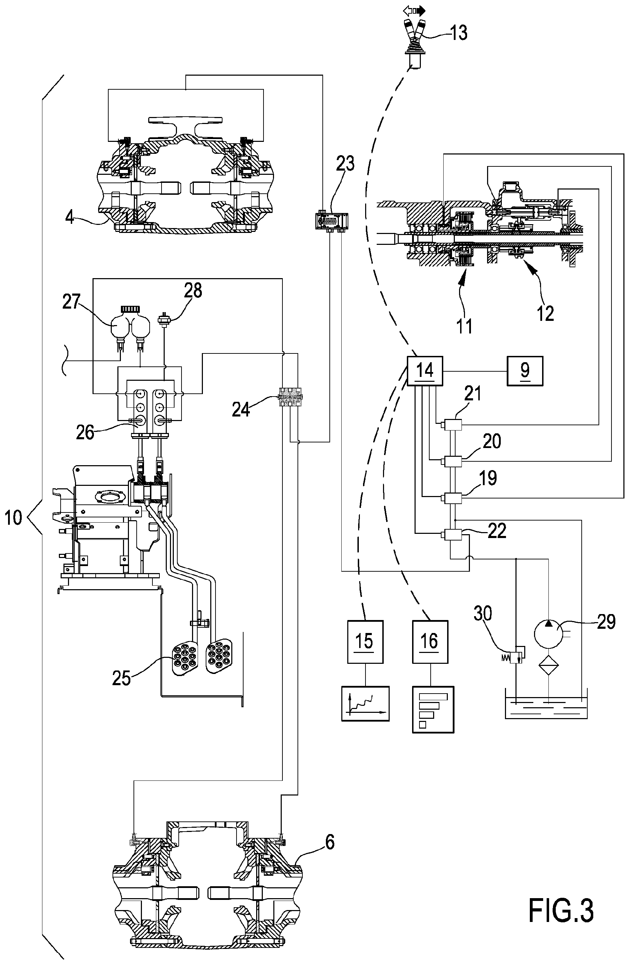

In the tractor 1 of Figure 1 at the cab 3 there is also a lever or equivalent controls (not shown, and illustrated schematically in Figure 3 by the reference number 13) for automatically actuating the reversal of the direction of travel. How this lever contributes to this object will be detailed in the description of Figure 3.

Figure 2 shows a schematic lateral view of a second preferred example of a half-track tractor which can carry out the reversal of the direction of travel according to the present invention;

In particular, the tractor 1 of Figure 2 differs from the tractor 1 of Figure 1 only in some details of which the most important are the presence of rear tracks 8 in place of the rear wheels 7 and the presence of a closed cab 3 for safety reasons.

The rest of the structure of the tractor 1 of Figure 2 is quite similar to the tractor 1 of Figure 1. In fact, although the tractor 1 of Figure 2 cannot be defined as "isodiametric" because of the absence of rear wheels, the rear track 8 has a vertical dimension substantially equal to the front wheels 5 with the result that even this tractor can be defined as of smaller dimensions such as to be scarcely able to be equipped with the electrohydraulic dual-clutch devices with the function of reversing the direction of travel of the currently known tractor.

Figure 3 shows a schematic view of the integrated components of the tractors of Figures 1 and 2 (and beneficially in all tractors of similar size) which contribute in a coordinated manner to the achievement of the reversal of the direction of travel of the tractor.

The central element of Figure 3 is the control unit 14. This control unit 14 is connected to the lever 13 in order to receive the signal according to the desire of the driver to reverse the direction of travel with the tractor 1 in motion as well as for starting off or reversing the direction of travel with the tractor 1 stationary and / or for producing a controlled stop.

Once the lever 13 has been operated, the control unit 14 provides for automatically controlling a series of mechanical components, shown schematically in Figure 3, including the braking system 10, the clutch 11 and the selector 12 and optionally the engine 9.

In particular, Figure 3 shows a first 19, a second 20, a third 21 and a fourth proportional valve 22. The first proportional valve 19 is connected on one side to the control unit 14 and on the other side to the clutch 11 and is configured to selectively engage and release the clutch 11 under the control of the control unit 14. The second 20 and third proportional valves 21 are connected on one side to the control unit 14 and on the other side to the selector 12 to selectively engage a forward or reverse gear ratio under the control of the control unit 14.

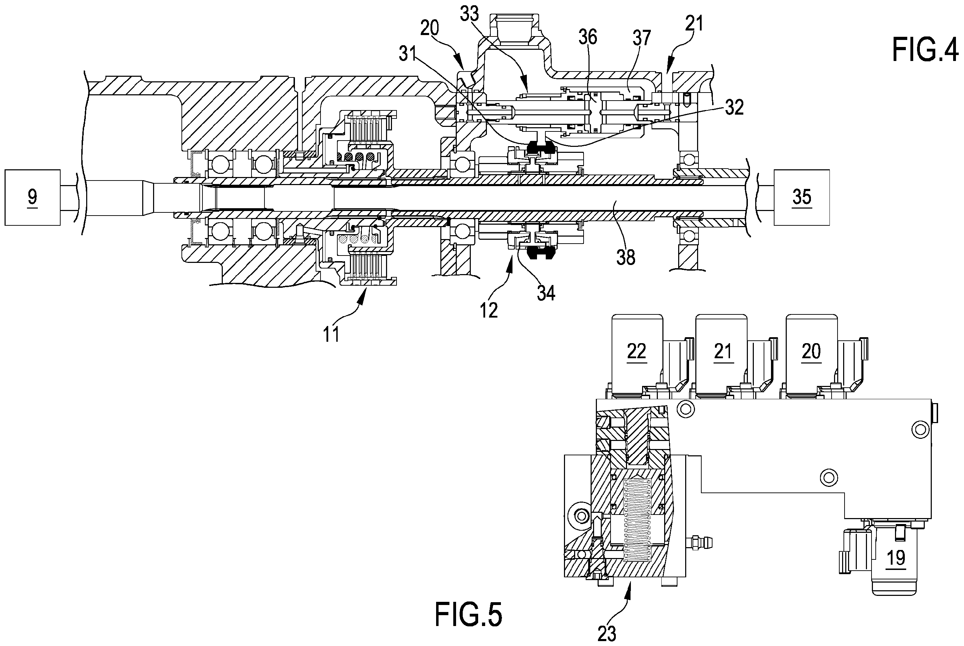

How the second 20 and third proportional valves 21 are connected to the selector 12 will become more apparent in the detailed description of Figure 4.

The fourth proportional valve 22 is connected on one side to the control unit 14 and on the other side to the braking system 10 so as to control the progressive deceleration of the motion of the tractor 1 under the control of the control unit 14.

The example of the braking system 10 of Figure 3 comprises a hydraulic actuator 23 connected on one side to the fourth solenoid valve 22 and on the other side to the front axle 4 and the rear axle 6. In order to optimise the automatic braking phase, the system 10 of Figure 3 also comprises a braking distributor 24 connected on one side to the hydraulic actuator 23 interposed between the rear axle 6 of the tractor 1. For completeness, the braking system of Figure 3 comprises pedals 25, brake pumps 26, an oil reservoir 27, a brake lights sensor 28 and a hydraulic pump 29 with a pressure relief valve 30 to ensure the required operating pressure for the system.

The control unit 14 activates the engine 10 and the valves 19-22 as a function of two inputs, schematically shown in Figure 3 with the reference numbers 15 and 16. In particular, the input shown schematically with the reference number 15 corresponds to at least one objective operational parameter of the tractor 1 which is continuously measured by at least one appropriate sensor. For example, the parameter 15 shown is the variation over time of the speed of the tractor 1. The input indicated schematically by the reference number 16 instead corresponds to at least one subjective control parameter set by the driver. In particular, in the example of Figure 3 the subjective parameter is adjustable along a graduated scale to adjust, for example, the deceleration that determines the power level that can be delivered to the braking system 10 and/or the acceleration that determines the propulsion power.

Figure 4 shows in detail an embodiment of a portion of the transmission for the tractor 1 which incorporates the clutch 11 and the selector 12.

In particular, the selector 12 comprises a fork 31 placed at the end of the sliding bar 32 which cooperates with a synchroniser 34. The motion of the fork 31, which together with the synchroniser 34 determines the engagement of the forward and reverse gear ratios, is controlled by a double-acting piston 33 provided with a head 36 in lateral contact with the walls of a respective cylinder 37. As shown schematically in Figure 4, the output ducts from the valves 20 and 21 feed out at the opposite ends of the cylinder 37 and, under the control of the control unit 14, they enable movement of the piston 33 and thus of the fork 31 for selecting the ratio of the forward or reverse gear. Finally, the engine 9 and the gearbox 35, respectively at opposite ends of the drive shaft 38, are schematically shown in Figure 4.

Figure 5 shows a preferred embodiment of the hydraulic actuator 23 in the form of a double chamber cylinder coupled to one end of the valve assembly comprising the four abovementioned solenoid valves 19, 20, 21, 22.
It is clear therefore that the only action required of the driver to carry out an effective and reliable reversal of the direction of travel of the tractor is to operate the lever 13 and optionally to make a pre-selection of the desired level of the subjective control parameter 16.

Finally, it is apparent that the invention described herein may be subject to modifications and variations without departing from the scope of the appended claims.

## Claims

1. A tractor (1) comprising a chassis (2), a cab (3), a front axle (4) provided with a pair of front wheels (5), a rear axle (6) provided with a pair of rear wheels (7) or rear tracks (8), an engine (9), a braking system (10), a single clutch (11), a selector (12) for selectively engaging the forward and reverse gear ratios, a control (13) for automatically reversing the direction of travel, and a control unit (14);
Wherein the control unit (14), once the control (13) for automatically reversing the direction of travel has been activated, is configured so as to control the braking system (10), the selector (12) and the clutch (11) in a coordinated manner so as to reverse the direction of travel; **characterised in that** the tractor (1) moreover comprises:
- at least an inertial sensor arranged on the chassis and configured for continuously measuring the acceleration of the tractor as objective operating parameter (15) and for transmitting the objective operating parameter (15) to the control unit (14);
- at least a knob configured for allowing the driver to set along a graduated scale a subjective control parameter (16) for controlling the process of the reversal of the direction of travel;
wherein the control unit (14) is configured so as to control the braking system (10), the selector (12) and the clutch (11) in a coordinated manner depending on the objective operating parameter (15) of the tractor and the subjective control parameter (16) set by the driver.

2. The tractor (1) as claimed in claim 1, wherein the inertial sensor is a gyroscopic sensor.

3. The tractor (1) as claimed in any one of the foregoing claims, wherein the braking system (10) acts on both the front and rear axles (4, 6).

4. The tractor (1) as claimed in any one of the foregoing claims, wherein the subjective parameter (16) set by the user controls the power to be delivered to the braking system (10) and/or controls the propulsion power.

5. The tractor (1) as claimed in claim 4, wherein the control unit (14) is configured so as to control the engine (9) to reverse the direction of travel in a manner depending on the braking power to be delivered to the braking system (10) set by the user and/or the subjective parameter of the propulsion power.

6. The tractor (1) as claimed in any one of the foregoing claims, wherein the subjective parameter (16) set by the user is the braking distance.

7. A method for automatically reversing the direction of travel of a tractor; the method comprising the steps of:
a) providing a tractor (1) comprising a chassis (2), a cab (3), a front axle (4) provided with a pair of front wheels (5), a rear axle (6) provided with a pair of rear wheels (7) or rear tracks (8), an engine (9), a braking system (10), a single clutch (11), a selector (12) for selectively engaging the forward and reverse gear ratios, a control (13) for automatically reversing the direction of travel, a control unit (14) connected to the control (13) for automatically reversing the direction of travel, to the braking system (10), to the selector (12), and to the clutch (11);
b) actuating the control (13) for automatically reversing the direction of travel;
c) controlling by means of the control unit (14) in an automatic and coordinated way the following steps of:
c.1) actuating the braking system (10) for braking the tractor (1) if in motion;
c.2) disengaging the clutch (11);
c.3) actuating the selector (12) in order to select a gear ratio for the direction opposite to the direction of the current motion of the tractor (1);
c.4) engaging the clutch (11);
**characterised in that** the method comprises the step of:
- measuring by at least one inertial sensor arranged on the chassis and transmitting to the control unit (14) the acceleration of the tractor as objective operating parameter (15); wherein the step of measuring the acceleration is continuously performed during the entire process of the reversal of the direction of travel;
- setting a subjective parameter (16) along a graduated scale of values before the actuation the control (13) for automatically reversing the direction of travel;
wherein the step of controlling in an automatic and coordinated way by means of the control unit (14) the braking system (10), the clutch (11) and the selector (12) is performed depending on the objective operating parameter (15) of the tractor and the subjective control parameter (16) set by the driver.

8. The method as claimed in claim 7, wherein the subjective parameter (16) is the braking power level to be delivered to the braking system (10); the control unit being configured so as to control the engine (9) for accelerating the tractor (1) to reverse the direction of travel in a manner depending on the level of braking power selected by the driver to be delivered to the braking system (10).

## Patentansprüche

1. Traktor (1), aufweisend ein Fahrgestell (2), ein Führerhaus (3), eine Vorderachse (4), die mit einem Paar Vorderrädern (5) versehen ist, eine Hinterachse (6), die mit einem Paar Hinterrädern (7) oder hinteren Laufketten (8) versehen ist, einen Motor (9), ein Bremssystem (10), eine Einzelkupplung (11), eine Wähleinrichtung (12) zum selektiven Einlegen der Vorwärts- und Rückwärtsgangübersetzungen, eine Steuerung (13) zum automatischen Umkehren der Fahrtrichtung und eine Steuereinheit (14);
wobei die Steuereinheit (14), sobald die Steuerung (13) zum automatischen Umkehren der Fahrtrichtung aktiviert wurde, so konfiguriert ist, um das Bremssystem (10), die Wähleinrichtung (12) und die Kupplung (11) in einer koordinierten Weise zu steuern, um die Fahrtrichtung umzukehren; **dadurch gekennzeichnet, dass** der Traktor (1) ferner aufweist:
- mindestens einen Trägheitssensor, der auf dem Fahrgestell angeordnet ist und konfiguriert ist zum kontinuierlichen Messen der Beschleunigung des Traktors als objektiver Betriebsparameter (15) und zur Übertragung des objektiven Betriebsparameters (15) zu der Steuereinheit (14);
- mindestens einen Knopf, der konfiguriert ist, um es dem Fahrer zu ermöglichen, entlang einer abgestuften Skala einen subjektiven Steuerparameter (16) zur Steuerung des Prozesses der Umkehrung der Fahrtrichtung einzustellen;
wobei die Steuereinheit (14) so konfiguriert ist, um das Bremssystem (10), die Wähleinrichtung (12) und die Kupplung (11) in koordinierter Weise abhängig von dem objektiven Betriebsparameter (15) des Traktors und dem vom Fahrer eingestellten subjektiven Steuerparameter (16) zu steuern.

2. Traktor (1) wie in Anspruch 1 beansprucht, wobei der Trägheitssensor ein Kreiselsensor ist.

3. Traktor (1) wie in einem der vorhergehenden Ansprüche beansprucht, wobei das Bremssystem (10) sowohl auf die Vorder- als auch auf die Hinterachse (4, 6) einwirkt.

4. Traktor (1) wie in einem der vorhergehenden Ansprüche beansprucht, wobei der vom Benutzer eingestellte subjektive Parameter (16) die an das Bremssystem (10) zu liefernde Leistung steuert und/oder die Antriebsleistung steuert.

5. Traktor (1) wie in Anspruch 4 beansprucht, wobei die Steuereinheit (14) so konfiguriert ist, um den Motor (9) so zu steuern, dass die Fahrtrichtung in Abhängigkeit von der an das Bremssystem (10) zu liefernden Bremsleistung, die vom Benutzer eingestellt wird, und/oder dem subjektiven Parameter der Antriebsleistung umgekehrt wird.

6. Traktor (1) wie in einem der vorhergehenden Ansprüche beansprucht, wobei der vom Benutzer eingestellte subjektive Parameter (16) der Bremsweg ist.

7. Verfahren zum automatischen Umkehren der Fahrtrichtung eines Traktors; wobei das Verfahren die folgenden Schritte umfasst:
a) Bereitstellen eines Traktors (1), aufweisend ein Fahrgestell (2), ein Führerhaus (3), eine Vorderachse (4), die mit einem Paar Vorderrädern (5) versehen ist, eine Hinterachse (6), die mit einem Paar Hinterrädern (7) oder hinteren Laufketten (8) versehen ist, einen Motor (9), ein Bremssystem (10), eine Einzelkupplung (11), eine Wähleinrichtung (12) zum selektiven Einlegen der Vorwärts- und Rückwärtsgangübersetzungen, eine Steuerung (13) zum automatischen Umkehren der Fahrtrichtung, eine mit der Steuerung (13) verbundene Steuereinheit (14) zum automatischen Umkehren der Fahrtrichtung, zum Bremssystem (10), zu der Wähleinrichtung (12) und zur Kupplung (11);
b) Betätigen der Steuerung (13) zum automatischen Umkehren der Fahrtrichtung;
c) Steuerung der folgenden Schritte in automatischer und koordinierter Weise mittels der Steuereinheit (14):
c.1) Betätigen des Bremssystems (10) zum Bremsen des Traktors (1), wenn er in Bewegung ist;
c.2) Auskuppeln der Kupplung (11);
c.3) Betätigen der Wähleinrichtung (12), um ein Übersetzungsverhältnis für die Richtung auszuwählen, die der Richtung der aktuellen Bewegung des Traktors (1) entgegengesetzt ist;
c.4) Einkuppeln der Kupplung (11);
**dadurch gekennzeichnet, dass** das Verfahren die folgenden Schritte umfasst:
- Messen der Beschleunigung des Traktors als objektiven Betriebsparameter (15) durch mindestens einen Trägheitssensor, der auf dem Fahrgestell angeordnet ist, und Übertragen an die Steuereinheit (14), wobei der Schritt der Messung der Beschleunigung kontinuierlich während des gesamten Prozesses der Umkehrung der Fahrtrichtung durchgeführt wird;
- Einstellen eines subjektiven Parameters (16) entlang einer abgestuften Skala von Werten vor Betätigung der Steuerung (13) zur automatischen Umkehrung der Fahrtrichtung;
wobei der Schritt der Steuerung des Bremssystems (10), der Kupplung (11) und der Wähleinrichtung (12) in automatischer und koordinierter Weise mittels der Steuereinheit (14) in Abhängigkeit von dem objektiven Betriebsparameter (15) des Traktors und von dem vom Fahrer eingestellten subjektiven Steuerparameter (16) ausgeführt wird.

8. Verfahren wie in Anspruch 7 beansprucht, wobei der subjektive Parameter (16) das an das Bremssystem (10) zu liefernde Bremsleistungsniveau ist; die Steuereinheit so konfiguriert ist, dass sie den Motor (9) zum Beschleunigen des Traktors (1) so steuert, um die Fahrtrichtung in Abhängigkeit von dem vom Fahrer ausgewählten Grad der Bremsleistung, die dem Bremssystem (10) zuzuführen ist, umzukehren.

## Revendications

1. Tracteur (1) comprenant un châssis (2), une cabine (3), un essieu avant (4) pourvu d'une paire de roues avant (5), un essieu arrière (6) pourvu d'une paire de roues arrière (7) ou de chenilles arrière (8), un moteur (9), un système de freinage (10), un embrayage simple (11), un sélecteur (12) pour engager de manière sélective les rapports de vitesse de marche avant et de marche arrière, une commande (13) pour inverser automatiquement le sens de déplacement, et une unité de commande (14) ; l'unité de commande (14), une fois que la commande (13) pour inverser automatiquement le sens de déplacement a été activée, étant configurée de manière à commander le système de freinage (10), le sélecteur (12) et l'embrayage (11) de manière coordonnée de sorte à inverser le sens de déplacement ;
**caractérisé en ce que** le tracteur (1) comprend en outre :
- au moins un capteur inertiel agencé sur le châssis et configuré pour mesurer en continu l'accélération du tracteur en tant que paramètre de fonctionnement objectif (15) et pour transmettre le paramètre de fonctionnement objectif (15) à l'unité de commande (14) ;
- au moins un bouton configuré pour permettre au conducteur de régler, le long d'une échelle graduée, un paramètre de commande subjectif (16) pour commander le processus d'inversion du sens de déplacement ;
l'unité de commande (14) étant configurée de sorte à commander le système de freinage (10), le sélecteur (12) et l'embrayage (11) de manière coordonnée en fonction du paramètre de fonctionnement objectif (15) du tracteur et du paramètre de commande subjectif (16) réglé par le conducteur.

2. Tracteur (1) selon la revendication 1, dans lequel le capteur inertiel est un capteur gyroscopique.

3. Tracteur (1) selon l'une quelconque des revendications précédentes, dans lequel le système de freinage (10) agit à la fois sur les essieux avant et arrière (4, 6).

4. Tracteur (1) selon l'une quelconque des revendications précédentes, dans lequel le paramètre subjectif (16) réglé par l'utilisateur commande la puissance à fournir au système de freinage (10) et/ou commande la puissance de propulsion.

5. Tracteur (1) selon la revendication 4, dans lequel l'unité de commande (14) est configurée de sorte à commander le moteur (9) pour inverser le sens de déplacement en fonction de la puissance de freinage à fournir au système de freinage (10) réglée par l'utilisateur et/ou du paramètre subjectif de la puissance de propulsion.

6. Tracteur (1) selon l'une quelconque des revendications précédentes, dans lequel le paramètre subjectif (16) réglé par l'utilisateur est la distance de freinage.

7. Procédé pour inverser automatiquement le sens de déplacement d'un tracteur ; le procédé comprenant les étapes suivantes :
a) la fourniture d'un tracteur (1) comprenant un châssis (2), une cabine (3), un essieu avant (4) pourvu d'une paire de roues avant (5), un essieu arrière (6) pourvu d'une paire de roues arrière (7) ou de chenilles arrière (8), un moteur (9), un système de freinage (10), un embrayage simple (11), un sélecteur (12) pour engager de manière sélective les rapports de vitesse de marche avant et de marche arrière, une commande (13) pour inverser automatiquement le sens de déplacement, une unité de commande (14) connectée à la commande (13) pour inverser automatiquement le sens de déplacement, au système de freinage (10), au sélecteur (12) et à l'embrayage (11) ;
b) l'actionnement de la commande (13) pour inverser automatiquement le sens de déplacement ;
c) la commande, au moyen de l'unité de commande (14), de manière automatique et coordonnée, des étapes suivantes :
c.1) l'actionnement du système de freinage (10) pour freiner le tracteur (1) s'il est en mouvement ;
c.2) le désengagement de l'embrayage (11) ;
c.3) l'actionnement du sélecteur (12) afin de sélectionner un rapport de vitesse pour le sens opposé au sens du déplacement actuel du tracteur (1) ;
c.4) l'engagement de l'embrayage (11) ;
**caractérisé en ce que** le procédé comprend les étapes suivantes :
- la mesure, par au moins un capteur inertiel disposé sur le châssis, et la transmission à l'unité de commande (14), de l'accélération du tracteur en tant que paramètre de fonctionnement objectif (15) ; l'étape de mesure de l'accélération étant effectuée en continu pendant tout le processus d'inversion du sens de déplacement ;
- le réglage d'un paramètre subjectif (16) le long d'une échelle graduée de valeurs avant l'actionnement de la commande (13) pour inverser automatiquement le sens de déplacement ;
l'étape de commande, de manière automatique et coordonnée, au moyen de l'unité de commande (14), du système de freinage (10), de l'embrayage (11) et du sélecteur (12) étant effectuée en fonction du paramètre de fonctionnement objectif (15) du tracteur et du paramètre de commande subjectif (16) réglé par le conducteur.

8. Procédé selon la revendication 7, dans lequel le paramètre subjectif (16) est le niveau de puissance de freinage à fournir au système de freinage (10) ; l'unité de commande étant configurée de sorte à commander le moteur (9) de manière à ce qu'il accélère le tracteur (1) pour inverser le sens de déplacement en fonction du niveau de puissance de freinage sélectionné par le conducteur à fournir au système de freinage (10).
